# EUROPEAN PATENT APPLICATION

(11) **EP 4 759 944 A1**
(43) Date of publication of application: **17.06.2026**
(21) Application number: 25221453.1
(22) Date of filing: 08.12.2025
(51) Int. Cl.: C22B 1/00, C22B 1/02, C22B 7/00, C22B 15/00, C22B 3/00, H01M 10/0525, H01M 10/54

(54) **METHOD FOR REPRODUCING VALUABLE METAL**

(30) Priority: 11.12.2024 JP 2024216383
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo,, 103-0022 (JP); OUCHI, Takanari, Tokyo, 113-8654 (JP)
(74) Representative: Kuhnen & Wacker Patent- und Rechtsanwaltsbüro PartG mbB

(57) **Abstract**

The present invention provides a novel method that makes it possible to efficiently separate Cu from battery waste containing Ni, Co, and Cu. A method for reproducing valuable metals according to the present disclosure includes: a step of roasting waste of a lithium ion secondary battery to obtain a roasted product; and a step of leaching Cu from the roasted product using an ammonia water. The waste contains Ni, Co, and Cu. The roasting is performed such that the roasted product contains Ni and Co in an oxide form and Cu in a metal form.

## Description

### BACKGROUND OF THE DISCLOSURE

### 1. Field

The present disclosure relates to a method for reproducing valuable metals from lithium ion secondary battery waste.

### 2. Background

Lithium ion secondary batteries are widely used in various fields such as power sources for vehicle drive, or portable power sources. In recent years, the material recycling of used lithium ion secondary batteries has been promoted from the viewpoint of SDGs. Various valuable metals (e.g. Ni, Co, Cu) are used in lithium ion secondary batteries. For the material recycling, technologies have been developed, in which valuable metals contained in used lithium ion secondary batteries are separated.

Representative examples of positive electrode active materials for lithium ion secondary batteries that have been practically used for automotive applications include lithium-nickel-cobalt-manganese composite oxides (NCM) and lithium-nickel-cobalt-aluminum composite oxides (NCA), both of which contain Ni and Co. In Non-Patent Literature 1, Ni and Co are selectively leached and separated from Ni, Co, Mn, and Al contained in waste of a positive electrode of a used lithium ion secondary battery, using a leaching liquid containing ammonia and ammonium sulfate.

### Citation List

Non-Patent Literature 1: Waste Management, February 2017, vol. 60, p. 680-688

### SUMMARY

On the other hand, Cu is generally used for the negative electrode current collectors of lithium ion secondary batteries. As a result of intensive studies, the present inventors have found that the above-described prior art has the following problems. When lithium ion secondary battery waste are subjected to leaching according to the prior art, Cu is also leached in addition to Ni and Co. While Ni and Co are metal elements used for positive electrode active materials, Cu is a metal element used for negative electrode current collector, and therefore, for the material recycling, it is necessary to separate only Cu from Ni, Co, and Cu.

Thus, an object of the present disclosure is to provide a novel method that makes it possible to efficiently separate Cu from battery waste containing Ni, Co, and Cu.

The method for reproducing valuable metals according to the present disclosure includes: a step of roasting waste of a lithium ion secondary battery to obtain a roasted product; and a step of leaching Cu from the roasted product using ammonia water. The waste contains Ni, Co, and Cu. The roasting is performed such that the roasted product contains Ni and Co in an oxide form, as well as Cu in a metal form.

According to this configuration, Cu can be efficiently separated from battery waste containing Ni, Co, and Cu.

### BRIEF DESCRIPTION OF THE DRAWINGS

FIG. 1 is a flowchart of each step of a method for reproducing valuable metals according to the present disclosure;
FIG. 2 is a schematic longitudinal sectional view showing an internal structure of a lithium ion secondary battery as an example; and
FIG. 3 is a schematic exploded view showing a configuration of an electrode body of the lithium ion secondary battery illustrated in FIG. 2.

### DETAILED DESCRIPTION OF THE EMBODIMENTS

The embodiments of the present disclosure will be explained below with reference to the drawings. It should be noted that matters not mentioned herein but necessary for performing the present disclosure may be understood as design matters by those skilled in the art based on the prior art in the field. The present disclosure may be performed based on the content disclosed herein and the common technical knowledge in the field. Furthermore, in the following drawings, the same members and parts that exhibit the same functions are marked with the same symbols for explanation. In each drawing, the dimensional relationships (length, width, thickness, etc.) do not necessarily reflect the actual dimensional relationships. It should be noted that a numerical range expressed as "A to B" herein includes both A and B.

It should be noted that a "secondary battery" herein refers to a power storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

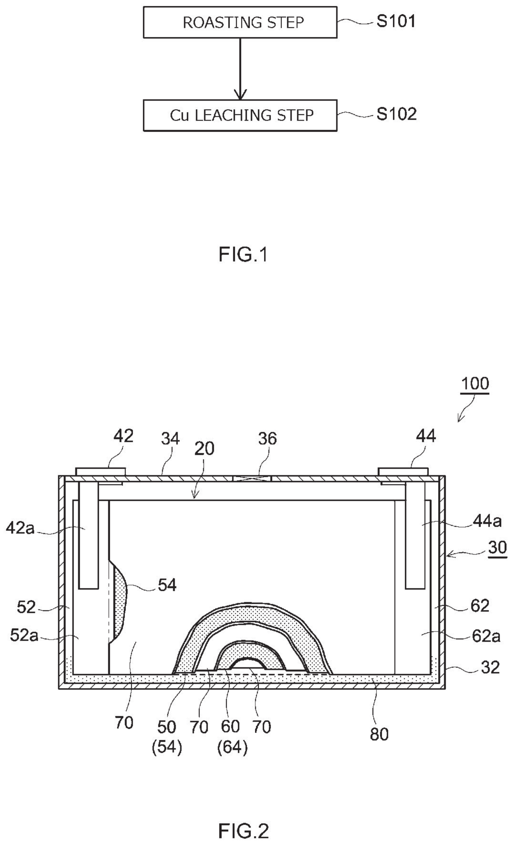

The method for reproducing valuable metals according to the present disclosure includes step S101 of roasting waste of a lithium ion secondary battery to obtain a roasted product (hereinafter, also referred to as "roasting step"), and step S102 of leaching Cu from the roasted product using ammonia water (hereinafter, also referred to as "Cu leaching step"), as shown in FIG. 1. Herein, the waste contains Ni, Co, and Cu. The roasting is performed such that the roasted product contains Ni and Co in an oxide form, as well as Cu in a metal form.

### <Lithium Ion Secondary Battery>

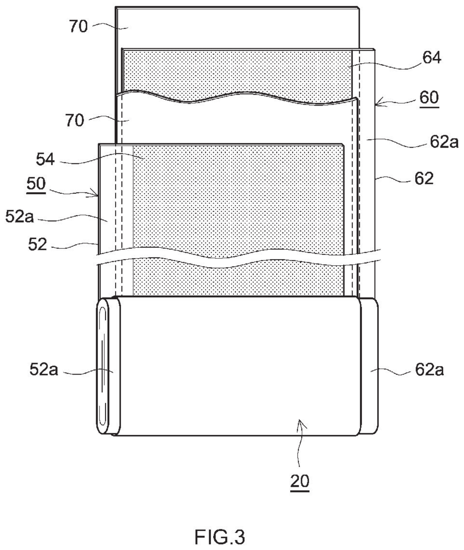

The method for reproducing valuable metals according to the present disclosure relates to the material recycling of lithium ion secondary batteries. First, a general configuration example of a lithium ion secondary battery will be explained. Examples of the structure of the lithium ion secondary battery are shown in FIG. 2 and FIG. 3. FIG. 2 is a schematic longitudinal sectional view showing an internal structure of the lithium ion secondary battery as an example. FIG. 3 is a schematic exploded view showing an electrode body of the lithium ion secondary battery illustrated in FIG. 2. It should be noted that the following description of the lithium ion secondary battery is provided for convenience of understanding and does not limit the method for reproducing valuable metals according to the present disclosure at all.

As shown in FIG. 2, a lithium ion secondary battery 100 is a sealed battery in which a battery case 30 accommodates a flat electrode body 20 and a non-aqueous electrolyte (not illustrated). As shown in FIG. 2, the battery case 30 is composed of an exterior body 32 accommodating the electrode body 20 and a lid 34 that closes an opening of the exterior body 32. The exterior body 32 and the lid 34 are sealed by welding such as laser welding. Examples of the material for the battery case 30 include aluminum, an aluminum alloy, and a resin.

In the example of the drawing, the battery case 30 is rectangular. However, the shape of the battery case 30 is not limited to this shape and may be, for example, cylindrical. Alternatively, the battery case 30 may be, for example, a laminate case having a gas barrier layer such as an aluminum layer and a sealant layer containing a thermoplastic resin.

The battery case 30 includes a positive electrode terminal 42 and a negative electrode terminal 44 for external connection. Also, the battery case 30 is provided with a safety valve 36 configured to release an internal pressure of the battery case 30 when the internal pressure rises to or above a predetermined level. The battery case 30 includes an injection port (not illustrated) for injecting a non-aqueous electrolyte. The positive electrode terminal 42 is electrically connected to a positive electrode current collector plate 42a. The negative electrode terminal 44 is electrically connected to a negative electrode current collector plate 44a.

As shown in FIG. 2 and FIG. 3, the electrode body 20 has a configuration in which an elongated positive electrode sheet 50 and an elongated negative electrode sheet 60 are laminated via two elongated separator sheets 70 and wound in the longitudinal direction. Thus, in this embodiment, the electrode body 20 is a wound electrode body. However, the electrode body 20 is not limited to this configuration and may also be a stacked-type electrode body with a plurality of positive electrodes and negative electrodes alternately laminated via separators.

As shown in FIG. 2, the positive electrode sheet 50 has a positive electrode active material layer 54 formed on one side or both sides (herein, both sides) of a positive electrode current collector 52 along the longitudinal direction. The positive electrode sheet 50 has a positive electrode active material layer non-formed portion 52a in which the positive electrode active material layer 54 is not formed and the positive electrode current collector 52 is exposed. The positive electrode current collector plate 42a is joined to the positive electrode active material layer non-formed portion 52a.

For example, the positive electrode current collector 52 constituting the positive electrode sheet 50 is made of aluminum foil or the like. The positive electrode active material layer 54 contains a positive electrode active material. The positive electrode active material is typically a lithium-transition metal composite oxide containing Ni and Co. Examples of the positive electrode active material include a lithium-nickel-cobalt-manganese composite oxide and a lithium-nickel-cobalt-aluminum composite oxide. The positive electrode active material layer 54 may contain a conductive material (e.g. carbon black, carbon nanotube), a binder (e.g. polyvinylidene fluoride), or the like.

The content of the positive electrode active material in the positive electrode active material layer 54 is desirably 70 mass% or more, more desirably 85 mass% or more and 99 mass% or less. The content of the conductive material in the positive electrode active material layer 54 is desirably 0.1 mass% or more and 20 mass% or less, more desirably 0.3 mass% or more and 15 mass% or less. The content of the binder in the positive electrode active material layer 54 is desirably 0.4 mass% or more and 15 mass% or less, more desirably 0.5 mass% or more and 10 mass% or less.

As shown in FIG. 3, the negative electrode sheet 60 has a negative electrode active material layer 64 formed on one side or both sides (herein, both sides) of a negative electrode current collector 62 along the longitudinal direction. The negative electrode sheet 60 has a negative electrode active material layer non-formed portion 62a in which the negative electrode active material layer 64 is not formed and the negative electrode current collector 62 is exposed. The negative electrode current collector plate 44a is joined to the negative electrode active material layer non-formed portion 62a.

Typically, the negative electrode current collector 62 constituting the negative electrode sheet 60 is made of copper foil. The negative electrode active material layer 64 contains a negative electrode active material. Examples of the negative electrode active material include carbon-based negative electrode active materials (e.g. graphite, hard carbon, soft carbon), and silicon-based negative electrode active materials (e.g. silicon, silicon oxide). The negative electrode active material layer 64 may contain a binder (e.g. styrene-butadiene rubber (SBR)), and a thickening agent (e.g. carboxymethyl cellulose (CMC)).

The content of negative electrode active material in the negative electrode active material layer 64 is desirably 90 mass% or more, more desirably 95 mass% or more and 99 mass% or less. The content of the binder in the negative electrode active material layer 64 is desirably 0.1 mass% or more and 8 mass% or less, more desirably 0.5 mass% or more and 3 mass% or less. The content of the thickening agent in the negative electrode active material layer 64 is desirably 0.3 mass% or more and 3 mass% or less, more desirably 0.5 mass% or more and 2 mass% or less.

Examples of the separator 70 include a porous resin sheet made of polyethylene, polypropylene, or the like. The porous sheet may have a single-layer structure or a multilayer structure. A heat-resistant layer (HRL) may be provided on the surface of the separator 70.

Typically, the non-aqueous electrolyte contains a non-aqueous solvent and a supporting salt (in other words, an electrolyte salt). Examples of the non-aqueous solvent include carbonates (e.g. ethylene carbonate (EC), ethylmethyl carbonate, dimethyl carbonate), esters, and ethers. Examples of the supporting salt include lithium salts such as LiPF₆. The concentration of the supporting salt is not particularly limited, but is desirably 0.7 mol/L to 1.3 mol/L. The non-aqueous electrolyte may contain various additives such as gas generating agents and film forming agents. Although the non-aqueous electrolyte is used as the electrolyte in this embodiment, the electrolyte may be a solid electrolyte.

The lithium ion secondary battery 100 is used, for example, for automotive applications (i.e. power sources for driving vehicles such as battery electric vehicles (BEV), hybrid electric vehicles (HEV), and plug-in hybrid electric vehicles (PHEV)) and for power supply applications for electronic apparatuses or the like.

As described above, in the positive electrode of the lithium ion secondary battery, Li, Ni, and Co are typically used for the positive electrode active materials. Generally, Al is used for the positive electrode current collector. Typically, Cu is used for the negative electrode current collector. Furthermore, in the lithium ion secondary battery, Li is used for the non-aqueous electrolyte. Also, Al may be used for the battery case. Each step of the method for reproducing valuable metals according to the present disclosure will be explained below in detail.

### <Roasting Step S101>

In roasting step S101, waste of a lithium ion secondary battery is roasted to obtain a roasted product. This roasting makes it possible to remove liquid components (e.g. electrolyte) from the lithium ion secondary battery and to carbonize resin components (e.g. binder, separator). Furthermore, the roasting makes it possible to deactivate the battery function.

Examples of the waste of the lithium ion secondary battery include used lithium ion secondary batteries and defective lithium ion secondary batteries. The waste may also be lithium ion secondary batteries subjected to any processing (e.g. electric discharge, crushing, sieving after crushing). Thus, this waste may be crushed lithium ion secondary batteries (so-called black mass).

This waste contains Ni, Co, and Cu. Typically, Ni and Co originate from the positive electrode active material described above. Thus, the waste typically contains Ni and Co in a form of an oxide (particularly a lithium-transition metal composite oxide containing Ni and Co). Typically, Cu originates from the negative electrode current collector described above. Consequently, the waste typically contains Cu in a form of a metal. However, the forms of Ni, Co, and Cu contained in the waste are not limited to these forms.

In the subsequent Cu leaching step S102, Cu is leached using an ammonia water. In this step, when the roasted product contains Ni and Co in an oxide form and Cu in a metal form, Ni, Co, and Cu can be leached with high selectivity. Thus, in roasting step S101, the roasting is performed such that the roasted product contains Ni and Co in an oxide form and Cu in a metal form.

Generally, in the roasting, carbon contained in the waste functionally serves as a reducing agent. For this reason, Ni and Co in a form of an oxide (particularly, in a form of lithium-transition metal composite oxide) contained in waste are reduced into metals at a high temperature. Since metal Ni and metal Co have a leachability higher than of Ni and Co in the oxide form, the general purpose of roasting also includes reducing Ni and Co to convert them into metal Ni and metal Co. On the other hand, if an amount of oxygen is large in the roasting, Cu is oxidized during the roasting.

Thus, the roasting conditions in roasting step S101 are determined as appropriate depending on the carbon and oxygen contents in the waste, the roasting atmosphere, or the like.

The roasting atmosphere is not particularly limited and may be an inert gas atmosphere, an air atmosphere, or the like. Since it is desirable that the oxygen concentration in the atmosphere is low from the viewpoint of preventing oxidation of Cu, the roasting atmosphere with an oxygen concentration of 5 vol% or lower is desirable, and an inert gas atmosphere is more desirable. Examples of the inert gas atmosphere include an Ar gas atmosphere and an N₂ gas atmosphere.

From the viewpoints of removing the liquid components in the lithium ion secondary battery, carbonizing the resin components, and deactivating the battery function, the roasting temperature is desirably 150°C or higher, more desirably 200°C or higher, even more desirably 250°C or higher. On the other hand, the upper limit of the roasting temperature may be selected so as to prevent excessive oxidation of Cu.

When the waste contains carbon-based negative electrode active materials (e.g. graphite, hard carbon, soft carbon), carbon (C) in the carbon-based negative electrode active material can functionally serve as a reducing agent. Herein, it is assumed that C is finally converted into CO₂, when carbon (C) reduces Ni and Co during the roasting, in other words, when carbon (C) is oxidized. Accordingly, regarding the molar ratio of carbon atoms to oxygen atoms in the waste (C/O ratio), the value "1/2" is used as a standard. When the C/O ratio in the waste is 1/2 or higher, the roasting is desirably performed under an inert gas atmosphere at 150°C to 400°C (desirably 150°C to 350°C, more desirably 200°C to 320°C).

On the other hand, when the C/O ratio in the waste is lower than 1/2, the roasting is desirably performed under an inert gas atmosphere at 150°C to 600°C (desirably 150°C to 550°C, more desirably 200°C to 520°C).

Furthermore, when the roasting is performed under the air atmosphere, the roasting temperature is desirably 150°C to 400°C, more desirably 200°C to 320°C. Even under the air atmosphere, the roasting can be performed such that the roasted product contains Ni and Co in an oxide form and Cu in a metal form.

In a particularly desirable configuration, the roasting is performed at 150°C to 400°C (desirably 200°C to 320°C). This case is advantageous because it is unnecessary to confirm the C/O ratio in the waste. Herein, the roasting is desirably performed under an inert atmosphere.

The roasting time is not particularly limited and is, for example, 1 to 24 hours, desirably 2 to 12 hours, more desirably 3 to 8 hours.

It should be noted that the molar ratio of carbon atoms to oxygen atoms (C/O ratio) in the waste can be confirmed as follows, for example.

The amount of carbon atoms in the waste can be determined according to a known method. Specifically, for example, the amount of carbon atoms in the waste can be determined by thermogravimetric-differential thermal analysis (TG-DTA), scanning electron microscope-energy dispersive X-ray spectroscopy (SEM-EDS), oxygen stream combustion-nondispersive infrared analysis, combustion capacity method, or the like.

The amount of oxygen atoms in the waste can be determined according to a known method. For example, when the chemical composition of the positive electrode active material in the waste is known in advance, the amount of oxygen atoms in the waste can be determined by measuring amounts of metal elements in the waste and calculating the amount of oxygen atoms, based on the measured amounts. Specifically, for example, when the positive electrode active material is a lithium-nickel-cobalt-manganese composite oxide represented as LiNiₓCo_{y}Mn_{z}O_{δ}, a part of the waste is first weighed out as a measurement sample, which is dissolved in an acid to prepare a solution. Subsequently, this solution is subjected to an inductively coupled plasma (ICP) analysis. Thereby, molar amounts of Ni, Co, and Mn in the waste can be determined. The amount of oxygen atoms can be calculated using the total molar amount of Ni, Co, and Mn and a ratio of x+y+z to δ.

Alternatively, the amount of oxygen atoms in the waste can be determined using an SEM-EDS analysis, an X-ray fluorescence (XRF) analysis, or the like. When these analyses are adopted, the amount of oxygen atoms can be determined even if the chemical composition of the positive electrode active material in the waste is unknown.

From the determined amounts of carbon atoms and oxygen atoms, the molar ratio of carbon atoms to oxygen atoms (C/O ratio) in the waste can be calculated.

The roasting can be performed using a known heating device (e.g. electric furnace). In this manner, a roasted product can be obtained. This roasted product contains Ni and Co in an oxide form, and Cu in a metal form. It should be noted that the states of Ni and Co in the roasted product can be confirmed using a powder X-ray diffraction (XRD). For the state of Cu, it can be confirmed whether Cu is in a metal form or an oxide form, from overlapping of elemental mappings of Cu and O using an SEM-EDS analysis.

Specifically, for example, in the case of Ni, the roasted product is subjected to a powder X-ray diffraction measurement using an Mo radiation source. In the resulting XRD spectrum, a peak of Ni oxide (NiO) appears at around 19°, and a peak of the metal Ni appears at around 20°. Furthermore, a peak of the positive electrode active material may also appear (e.g., a peak of the lithium-nickel-cobalt-manganese composite oxide appears at around 8°). The state of Ni can be confirmed from the presence or absence of these peaks and a ratio of the peak intensities. Also, the state of Co can be confirmed using the same method.

It should be noted that considering noises and the like in the XRD spectrum, in this specification, when a ratio of the peak intensity of metal Ni or Co to the peak intensity of Ni or Co oxide is 0.1 or lower, it can be judged that the roasted product contains Ni or Co in an oxide form. When a ratio of the peak intensity of Cu oxide to the peak intensity of metal Cu is 0.1 or lower, it can be judged that the roasted product contains Cu in a metal form. It is desirable that the peaks of metal Ni and metal Co do not appear in the XRD spectrum. Furthermore, it is desirable that the elemental mappings of Cu and O do not overlap in the SEM-EDS analysis.

Before Cu leaching step S102, a step of crushing the obtained roasted product and a step of sorting the crushed product may be additionally performed. The roasted product can be crushed according to a known method. Also, the crushed product can be sorted according to a known method. For example, these steps make it possible to sort the most of Cu from the roasted product.

### <Cu Leaching Step S102>

In Cu leaching step S102, Cu is leached from the roasted product obtained in roasting step S101 using an ammonia water.

The concentration of ammonia in the ammonia water is not particularly limited as long as Cu can be leached. The higher the ammonia concentration is, the higher the leachability is, and therefore the concentration of ammonia in the ammonia water is desirably 10 mass% or more, more desirably 15 mass% or more. Furthermore, the upper limit of the ammonia concentration is the saturation concentration of ammonia in water, which is about 35 mass%. From the viewpoint of the leachability and handleability, the ammonia concentration is particularly desirably 15 mass% to 25 mass%. For further improving the Cu selectivity during the leaching, the pH of the ammonia water at 20°C is desirably 12 or higher.

The ammonia water may contain only water and ammonia. The ammonia water may further contain components other than water and ammonia in an amount within such a range that the effects of the present disclosure are not inhibited (e.g. at a concentration of less than 10 mass%, 5 mass% or less, or 1 mass% or less).

The amount of the ammonia water is not particularly limited and may be the same as or similar to the amount of the ammonia water in a known ammonia leaching method. For example, the amount of the ammonia water is sufficient to completely immerse the roasted product.

For example, Cu leaching step S102 can be performed as follows. First, a container is prepared. The container may be a known container conventionally used for ammonia leaching. As necessary, the container may be equipped with heating means such as a heater, temperature measurement means such as a thermometer and a temperature sensor, and stirring means such as a stirring blade and a magnetic stir bar.

The roasted product and the ammonia water are introduced into the container. The order of introduction is not particularly limited, and any one of them may be first introduced, or both of them may be simultaneously introduced.

The leaching temperature in Cu leaching step S102 is not particularly limited, and the leaching may be performed at room temperature (i.e. 25±10°C), or under heating, or under cooling. From the viewpoints of energy conservation and prevention of ammonia volatilization, the leaching temperature is desirably higher than 0°C and 45°C or lower, more desirably 10°C or higher and 40°C or lower, even more desirably 15°C to 35°C.

The leaching time can be determined depending on the leaching temperature. It is desirable that the lower the leaching temperature is, the longer the selected leaching time is. The leaching time is, for example, 0.5 hours to 48 hours, desirably 1 hour to 24 hours, more desirably 1.5 hours to 12 hours.

It is desirable to perform stirring during the leaching. The stirring speed is not particularly limited, but is desirably 200 rpm or higher, more desirably 300 rpm or higher, even more desirably 400 rpm or higher. The stirring speed may be 2000 rpm or lower, 1000 rpm or lower, or 800 rpm or lower.

Oxygen is typically involved in the dissolution of metal Cu in the ammonia water. As this oxygen, dissolved oxygen in the ammonia water or oxygen in the atmosphere can be used. Thus, Cu leaching step S102 may be performed in the air, but, from the viewpoint of achieving a high leaching speed, it is desirable to feed oxygen to the ammonia water during the leaching. The feed of oxygen is desirably at least equimolar to Cu contained in the roasted product, desirably at least 3 molar times the Cu amount contained in the roasted product.

Oxygen can be fed according to a known method. For example, oxygen can be fed by introducing an oxygen-containing gas (e.g. oxygen gas, air) into the ammonia water by bubbling or the like. In this case, smaller bubbles allow for more efficient increase in the dissolved oxygen content. Alternatively, for example, oxygen can be fed by a process in which a container is sealed, into which oxygen is introduced while pressurized.

The leaching can be terminated by solid-liquid separation such as filtration. By this solid-liquid separation, a leachate containing Cu, and a solid residue containing at least one of Ni and Co can be obtained.

The leaching speeds of the Ni oxide and Co oxide into the ammonia water are significantly low, and, on the other hand, the leaching speed of metal Cu into the ammonia water is significantly high. Thus, in the method for reproducing valuable metals according to the present disclosure, Cu can be leached with high selectivity because the roasted product contains Ni and Co in an oxide form and Cu in a metal form. Consequently, the solid residue containing Ni and Co that are raw materials for the positive electrode active material, and Cu that is a raw material for the negative electrode current collector can be highly separated from each other.

Subsequently, Cu can be recovered from the leachate containing Cu according to a known method. For example, ammonia can be removed by volatilizing ammonia from the leachate. Ammonia can be volatilized by heating the leachate to, for example, 50°C or higher and lower than 100°C. Thereby, Cu can be recovered in a form of CuO. Alternatively, Cu can be recovered in a form of Cu(OH)₂ by adding sodium hydroxide to the Cu-containing leachate. The recovered Cu can be converted into a metal form and reused as a raw material for the negative electrode current collector. Consequently, the method for reproducing valuable metals according to the present disclosure can be applied as a method for producing a raw material for the negative electrode current collector.

Accordingly, the method for reproducing valuable metals according to the present disclosure may further include a step of volatilizing and removing ammonia from the Cu-containing leachate obtained in Cu leaching step S102. The method for reproducing valuable metals according to the present disclosure may further include a step of adding sodium hydroxide to the Cu-containing leachate obtained in Cu leaching step S102 to recover Cu in a form of Cu(OH)₂.

Also, Ni and Co can be recovered from the solid residue containing Ni and Co by ammonia leaching. Therefore, the method for reproducing valuable metals according to the present disclosure may further include a step of subjecting the solid residue obtained in Cu leaching step S102 to ammonia leaching to recover Ni and Co.

For example, this step may be performed as follows. An ammonia aqueous solution containing water, ammonia, and at least one inorganic ammonium salt selected from a group consisting of ammonium sulfate and ammonium carbonate (desirably ammonium sulfate) is prepared.

The ammonia concentration in the ammonia aqueous solution is, for example, 1 mass% to 35 mass%, desirably 5 mass% to 30 mass%, more desirably 15 mass% to 25 mass%. The inorganic ammonium salt is in such an amount that the pH of the ammonia aqueous solution is, for example, 9 to 12, desirably 10 to 11. The concentration of the inorganic ammonium salt in the ammonia aqueous solution is desirably 0.5 mol/L to 3 mol/L, more desirably 1 mol/L to 2.5 mol/L, even more desirably 1.5 mol/L to 2.0 mol/L.

The solid residue is subjected to leaching using this ammonia aqueous solution. The leaching may be performed at room temperature or under heating. The leaching temperature is desirably 45°C to 90°C, more desirably 60°C to 85°C. The leaching time is desirably 1 hour to 48 hours, more desirably 2 hours to 12 hours. In this way, Ni and Co can be leached into the ammonia aqueous solution. The solid residue can be removed by filtration or the like to obtain an aqueous phase containing Ni and Co. Ammonia can be removed from the aqueous phase by heating the aqueous phase. Ni and Co can be recovered from the aqueous phase according to a known method. Alternatively, the aqueous phase containing Ni and Co can be directly used for the production of the positive electrode active material.

The recovered Ni and Co can be reused as raw materials for the positive electrode active materials. Thus, the method for reproducing valuable metals according to the present disclosure can be applied as a method for producing a raw material for the positive electrode active material.

According to the method for reproducing valuable metals according to the present disclosure, Ni and Co for use in the positive electrode and Cu for use in the negative electrode can be separated and recovered from lithium ion secondary battery waste containing Ni, Co, and Cu. Furthermore, the method for reproducing valuable metals according to the present disclosure can be easily performed. Accordingly, the method for reproducing valuable metals according to the present disclosure is extremely useful in the material recycling of lithium ion secondary batteries.

Test examples of the present disclosure will be explained below in detail, however, the present disclosure is not intended to be limited to those described in these examples.

### [Examples 1 to 5 and Comparative Examples 1 to 8]

A positive electrode having a positive electrode active material layer containing a lithium-nickel-cobalt-manganese composite oxide (LiNi_{0.6}Co_{0.2}Mn_{0.2}O₂) and supported on an aluminum (Al) foil was crushed. The crushed positive electrode was sieved through a 500 µm mesh sieve to prepare a positive electrode powder. Also, a negative electrode having a electrode active material layer containing graphite and supported on a copper foil was crushed. The crushed negative electrode was sieved through a 500 µm mesh sieve to prepare a negative electrode powder. The obtained positive electrode powder and negative electrode powder were mixed to obtain a black mass. Herein, a mixing ratio of the positive electrode powder and the negative electrode powder was varied to prepare black masses with a molar ratio of carbon atoms to oxygen atoms (C/O ratio) of 1/2 or higher, and black masses with a C/O ratio of lower than 1/2.

Subsequently, each of the black mass was roasted under the atmosphere shown in Table 1 at the temperature shown in Table 1 for 6 hours to obtain a roasted black mass. The states of Ni, Co, and Cu contained in the roasted black mass were investigated according to the method described later. The results are shown in Table 1.

A 28 mass% ammonia water was prepared. The roasted black mass was added to the ammonia water and the resultant was stirred at 600 rpm for 1 hour and 30 minutes while bubbling with oxygen gas. The feeding rate of oxygen gas was 0.4 L/min. The temperature of the ammonia water during the stirring was 25°C to 30°C.

Subsequently, the ammonia water was subjected to solid-liquid separation by filtration to obtain a leachate and a solid residue.

### [Evaluation of Leaching Ratio]

Into an acid, 1 g of the roasted black mass used as the leaching sample was dissolved, and subjected to a high-frequency inductively coupled plasma (ICP) emission spectroscopy. From the analysis results, the amounts of Ni, Co, and Cu in the roasted black mass were determined. The amounts of these metals are the initial amounts before the ammonia leaching.

Subsequently, the leachates obtained in each of Examples and Comparative Examples were subjected to an ICP emission spectroscopy to determine the amounts of Ni, Co, and Cu in the leachate. Each leaching ratio of Ni, Co, and Cu was determined from a ratio (percentage) of the amount of each metal in the leachate to the initial amount of each metal in the roasted black mass. An average of the Ni leaching ratio and the Co leaching ratio was defined as "Ni, Co loss ratio" (i.e. an average proportion of Ni and Co not recovered), and the Cu leaching ratio was defined as a Cu removal ratio. The results are shown in Table 1.

### [Table 1]

**Table 1**

| | Roasting temperature (°C) | Roasting atmosphere | C/O ratio | State in the roasted product | | | Ni, Co loss ratio (%) | Cu removal ratio (%) |
|---|---|---|---|---|---|---|---|---|
| | | | | Ni | Co | Cu | | |
| Example 1 | 150 | Ar | no less than *1*/*2* | Ox de | Oxide | Metal | 2 | 99 |
| Example 2 | 300 | Ar | no less than 1/2 | Ox de | Oxide | Metal | 3 | 99 |
| Comparative Example 1 | 500 | Ar | no less than 1/2 | Oxide +Metal | Oxide+ Metal | Metal | 8 | 90 |
| Comparative Example 2 | 700 | Ar | no less than 1/2 | Oxide+Metal | Oxide+Metal | Metal | 12 | 82 |
| Comparative Example 3 | 900 | Ar | no less than 1/2 | Metal | Metal | Metal | 30 | 65 |
| Example 3 | 300 | Ar | less than 1/2 | Ox de | Oxide | Metal | 2 | 99 |
| Example 4 | 500 | Ar | less than 1/2 | Ox de | Oxide | Metal | 2 | 99 |
| Comparative Example 4 | 700 | Ar | less than 1/2 | Oxide+Metal | Oxide+Metal | Metal | 6 | 88 |
| Comparative Example 5 | 900 | Ar | less than 1/2 | Oxide+Metal | Oxide+Metal | Metal | 15 | 80 |
| Example 5 | 300 | Air | no less than 1/2 | Oxide | Oxide | Metal | 2 | 99 |
| Comparative Example 6 | 500 | Air | no less than 1/2 | Ox de | Oxide | Oxide +Metal | 4 | 75 |
| Comparative Example 7 | 700 | Air | no less than 1/2 | Ox de | Oxide | Oxide | 4 | 35 |
| Comparative Example 8 | 900 | Air | no less than 1/2 | Oxide | Oxide | Oxide | 2 | 30 |

As shown from the results of Comparative Examples 1 to 5, when at least a part of Ni and Co is reduced into a metal form during the roasting, more Ni and Co leach into the ammonia water, and furthermore the Cu removal ratio decreases. On the other hand, as shown from the results of Comparative Examples 6 to 8, when at least a part of Cu is oxidized, the Cu removal ratio remarkably decreases.

In contrast, the results of Examples 1 to 5 demonstrate that Cu can be selectively leached using the ammonia water by roasting the black mass such that the roasted product contains Ni and Co in an oxide form and Cu in a metal form. Consequently, it can be understood that the method for reproducing valuable metals according to the present disclosure makes it possible to efficiently separate Cu from battery waste containing Ni, Co, and Cu.

The specific examples of the present disclosure have been described above in detail, but these are examples and will not limit the scope of claims. The techniques described in the scope of claims include those in which the specific examples exemplified above are variously modified and changed.

In other words, the method for reproducing valuable metals according to the present disclosure includes the following items [1] to [9].
[1] A method for reproducing valuable metals, including:
   a step of roasting waste of a lithium ion secondary battery to obtain a roasted product; and
   a step of leaching Cu from the roasted product using an ammonia water; in which
   the waste contains Ni, Co, and Cu, and
   the roasting is performed such that the roasted product contains Ni and Co in an oxide form and Cu in a metal form.
[2] The method according to item [1], in which the roasting is performed at 150°C to 400°C.
[3] The method according to item [1], in which a molar ratio of carbon atoms to oxygen atoms in the roasted product is no less than 1/2, and
   the roasting is performed under an inert gas atmosphere at 150°C to 400°C.
[4] The method according to item [1], in which a molar ratio of carbon atoms to oxygen atoms in the roasted product is less than 1/2, and
   the roasting is performed under an inert gas atmosphere at 150°C to 600°C.
[5] The method according to any one of items [1] to [4], in which the waste contains Ni and Co in an oxide form, and Cu in a metal form.
[6] The method according to any one of items [1] to [5], in which oxygen is fed to the ammonia water in the step of leaching Cu.
[7] The method according to any one of items [1] to [6], further including a step of volatilizing and removing ammonia from a Cu-containing leachate obtained in the step of leaching Cu.
[8] The method according to any one of items [1] to [7], further including a step of adding sodium hydroxide to a Cu-containing leachate obtained in the step of leaching Cu to recover Cu in a form of Cu(OH)₂.
[9] The method according to any one of items [1] to [8], further including a step of subjecting a solid residue obtained in the step of leaching Cu to ammonia leaching to recover Ni and Co.

## Claims

1. A method for reproducing valuable metals, comprising:
a step (S101) of roasting waste of a lithium ion secondary battery (100) to obtain a roasted product; and
a step (S102) of leaching Cu from the roasted product using an ammonia water;
wherein
the waste contains Ni, Co, and Cu, and
the roasting is performed such that the roasted product contains Ni and Co in an oxide form and Cu in a metal form.

2. The method according to claim 1, wherein the roasting is performed at 150°C to 400°C.

3. The method according to claim 1, wherein a molar ratio of carbon atoms to oxygen atoms in the roasted product is no less than 1/2, and
the roasting is performed under an inert gas atmosphere at 150°C to 400°C.

4. The method according to claim 1, wherein a molar ratio of carbon atoms to oxygen atoms in the roasted product is less than 1/2, and
the roasting is performed under an inert gas atmosphere at 150°C to 600°C.

5. The method according to claim 1, wherein the waste contains Ni and Co in an oxide form, and Cu in a metal form.

6. The method according to claim 1, wherein oxygen is fed to the ammonia water in the step (S102) of leaching Cu.

7. The method according to claim 1, further comprising a step of volatilizing and removing ammonia from a Cu-containing leachate obtained in the step (S102) of leaching Cu.

8. The method according to claim 1, further comprising a step of adding sodium hydroxide to a Cu-containing leachate obtained in the step (S102) of leaching Cu to recover Cu in a form of Cu(OH)₂.

9. The method according to claim 1, further comprising a step of subjecting a solid residue obtained in the step (S102) of leaching Cu to ammonia leaching to recover Ni and Co.
